Europäisches Patentamt

European Patent Office

Office européen des brevets

(11) Publication number: **0 233 293**
A1

# EUROPEAN PATENT APPLICATION

published in accordance with Art. 158(3) EPC

(21) Application number: 86903553.5

(22) Date of filing: 16.05.86

Data of the international application taken as a basis:

(86) International application number:
PCT/JP86/00250

(87) International publication number:
WO86/07007 (04.12.86 86/26)

(51) Int. Cl.³: **B 31 F 1/28**

(30) Priority: 20.05.85 JP 74606/85

(43) Date of publication of application:
26.08.87 Bulletin 87/35

(84) Designated Contracting States:
CH DE FR GB IT LI NL

(71) Applicant: MITSUBISHI JUKOGYO KABUSHIKI KAISHA
5-1, Marunouchi 2-chome Chiyoda-ku
Tokyo 100(JP)

(72) Inventor: SEKI, Y. Mihara Machinery Works of Mitsubishi
Jukogyo K.K. 5007, Itozaki-cho Mihara-shi
Hiroshima-ken 729-03(JP)

(72) Inventor: SASASHIGE, H. Mihara Machinery Works of
Mitsubishi Jukogyo K.K. 5007, Itozaki-cho
Mihara-shi Hiroshima-ken 729-03(JP)

(72) Inventor: OKAWA, H. Mihara Machinery Works of
Mitsubishi
Jukogyo K.K. 5007, Itozaki-cho Mihara-shi
Hiroshima-ken 729-03(JP)

(74) Representative: Henkel, Feiler, Hänzel & Partner
Möhlstrasse 37
D-8000 München 80(DE)

(54) SINGLE FACER.

(57) In a single facer, not less than two pairs of vertically-arranged rolls for different corrugation are mounted on a rotary frame, and a rotary driving means for the replacement of the rolls is attached to the central shaft of the rotary frame. A coupling means which is capable of connecting and disconnecting a power transmission is provided on a roll driving system to enable the driving of one pair of rolls to be switched over to that of another. The bottom portions of the grooves in the lower pair of rolls and the central hollow shaft of the rotary frame are communicated by suction pipes, and a switch member is attached to the hollow shaft. A manifold for supplying steam to all pairs of rolls is also provided on the central shaft of the rotary frame.

FIG. 1

./...

FIG. 2

Title of the Invention

Single Facer

Field of the Art

This inventions concern a single facer for producing one-side corrugated sheet by a corrugator.

Background of the Art

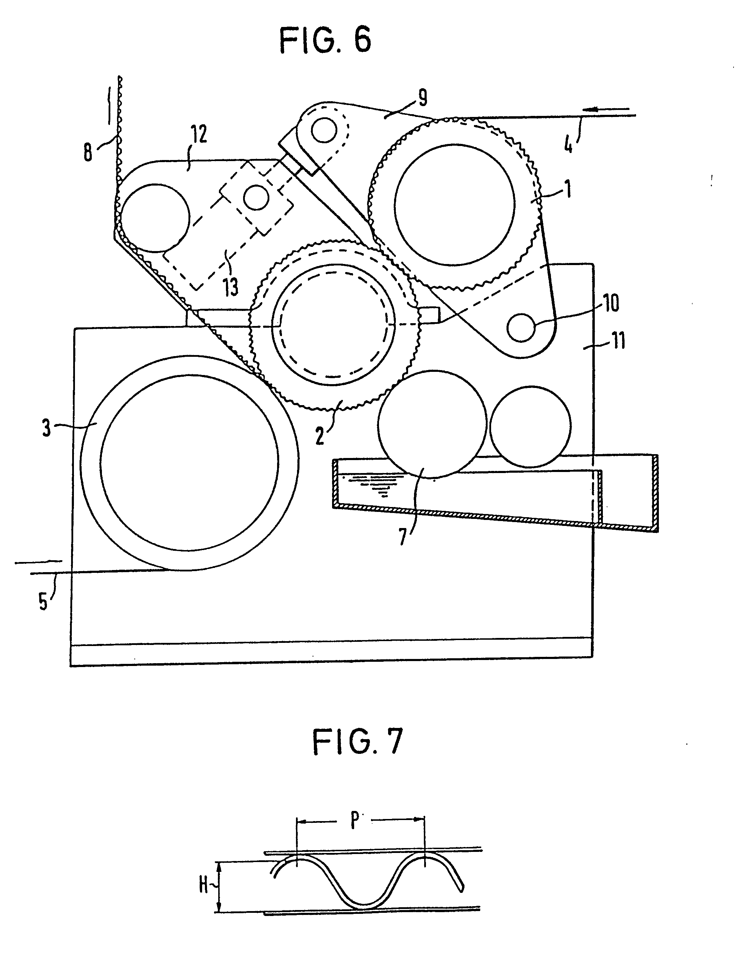

Figure 6 shows a front elevational cross sectional view of a conventional single facer. In Figure 6, core paper 4 is fed into the meshing point between an upper corrugation roll 1 and a lower corrugation roll the surfaces of which are fabricated into a corrugated shape and then fabricated into a corrugated configuration. Then, it is sized at the crests thereof by a sizing roll 7 and pressed together with a liner 5 fed from the other direction at an engaging portion between a press roll 3 and the lower corrugation roll 2 and heated into a one-side corrugated sheet 8. The upper roll 1 is attached by way of bearings to an arm 9. The arm 9 is rotatably attached at one end thereof to a frame 11 by means of a fulcrum 10 and the arm 9 is connected at the other end thereof with a rod of a cylinder 13 connected to a bracket 12 clamped to the frame 11. The lower corrugation roll 2 is attached to the

frame 11 and the bracket 12 by way of bearings.    0233293

The pressing force between the upper corrugation roll 1 and the lower corrugation roll 2 required for corrugating the core paper 4 is obtained by the thrust of the cylinder 13. Cavities are formed to the inside of the upper corrugation roll 1, lower corrugation roll 2 and pressure roll 3, so that steams may be introduced for facilitating the shaping of the corrugated configuration and appending of the core paper 4.

Figure 7 shows a cross sectional view of a corrugated board sheet. The corrugated board sheet is usually classified into four types of A, B, C and E flutes depending on the shape of the corrugations with different height H and pitch P for the corrugations and they are used respectively depending on the application uses.

However, in the conventional single facer, it has been necessary to dismantling the bracket 12, the fulcrum 10 and the steam pipeways shown Figure 6 and from 1 to 2 days have been required for the replacement since it is required to wait till the corrugation roll and peripheral parts heated to a high temperature by the steams introduced during operation are cooled to a low temperature. In view of the replacing time, only one kind of corrugated board sheets can be produced usually in one single facer at the present situation.

Disclosure of the Invention

Accordingly, this invention has been proposed for overcoming the foregoing drawbacks in the prior art and it is an object thereof to obtain a single facer capable of rapidly replacing corrugation rolls of different waveform shapes for coping with various corrugated board sheets.

In view of the above, according to this invention, two or more of paired upper and lower corrugation rolls of different waveform shapes are attached to a rotating frame and a rotational driving device is attached to the central shaft of the rotating frame for the replacement of the corrugation rolls. Further, a connection device capable of connecting and disconnecting the power transmission is attached to the driving system of the corrugation rolls for enabling exchangeable driving of the corrugation rolls. Furthermore, the groove bottom for each of the lower corrugation rolls and the hollow shaft at the center of the rotating frame are communicated with a suction pipe way and a switching member is attached to the hollow shaft. In addition, a manifold for supplying steams to all of the corrugation rolls is attached to the central shaft of the rotating frame.

After disconnecting the driving for the corrugation rolls during use by the connection device, when the rotational frame is rotated by the rotational driving device to stop at a predetermined position, a pair of corrugation

- 3 -

rolls different in the waveform shape from that of the corrugation rolls used previously are set to the operation position. Communication between the pair of set corrugation rolls and a suction source are carried out by each of the switching members.

This invention will now be described referring to a preferred embodiments illustrated in the appended drawings.


Brief Description of the Drawings

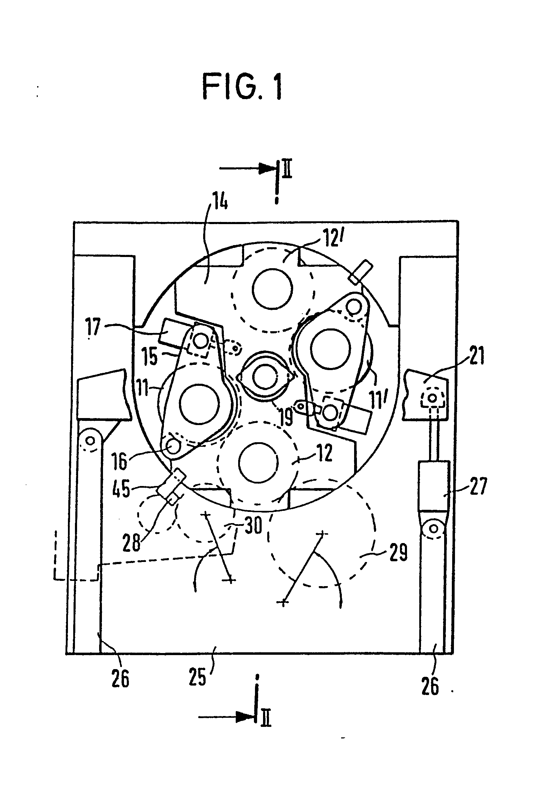

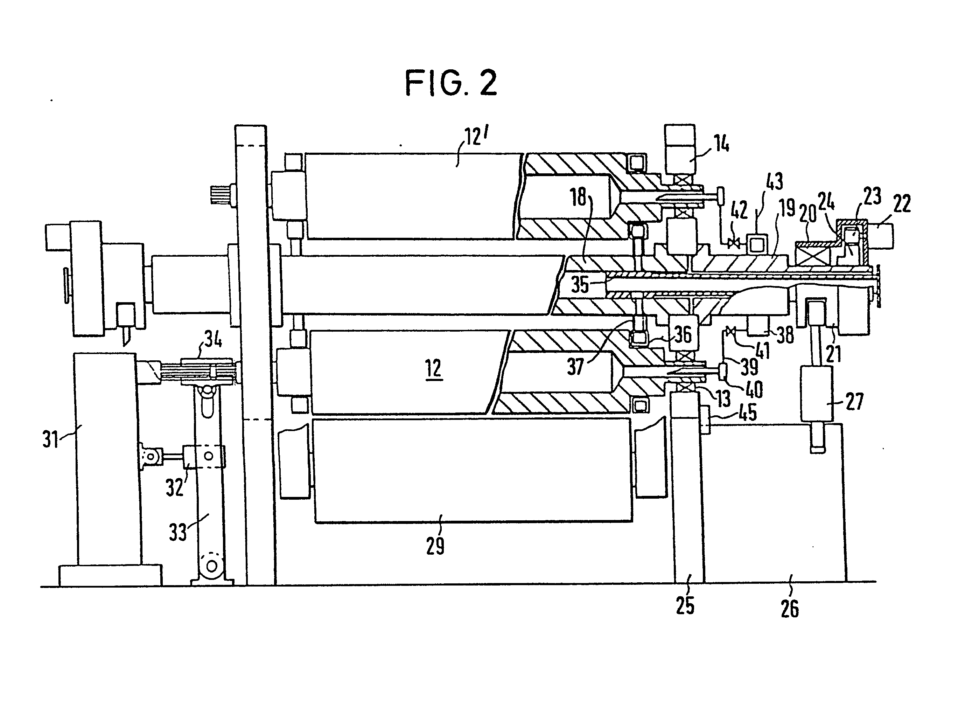

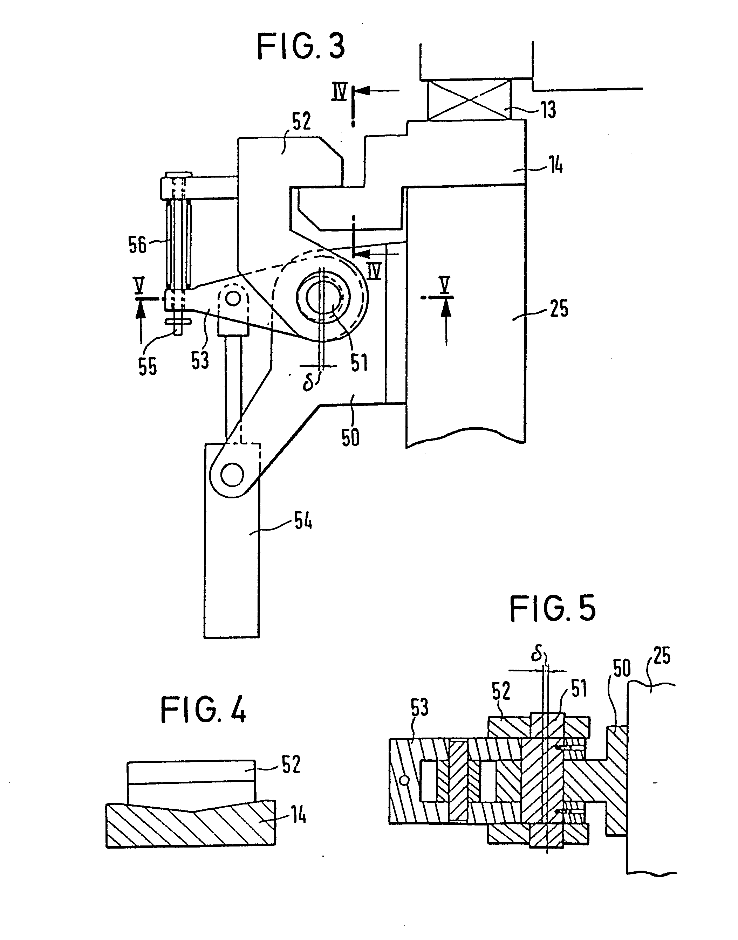

Figure 1 is a side elevational view showing the schematic entire constitution of a single facer according to this invention, Figure 2 is a cross sectional view taken along line II-II in Figure 1, Figures 3 through 5 show other embodiments of a pressing device in the single facer according to this invention, in which Figure 3 is a front elevational view, Figure 4 is a cross sectional view taken along line IV-IV in Figure 3, Figure 5 is a cross sectional view taken along line V-V in Figure 3, Figure 6 is a side elevational view showing a conventional single facer, and Figure 7 is a side elevational view of a corrugated board sheet.


Best Mode for Practicing the Invention

The single facer according to this invention will now be described referring to an embodiment shown in Figures 1 and 2. In the Figures, an upper corrugation roll 11 and a

- 4 -

lower corrugation roll 12, as well as upper corrugation roll 11' and lower corrugation roll 12' have the same waveform shape respectively and used in pair. The upper corrugation roll 11 and upper corrugation roll 11' of course have different waveform shapes. The lower corrugation roll 12 and 12' are attached rotatably to the rotating frame 14 by way of bearings 13. The upper corrugation rolls 11 and 11' are rotatably attached to arms 15. The arm 15 is movably attached at one end thereof to the rotating frame 14 by means of a fulcrum pin 16 and connected at the other end thereof to a cylinder 17 connected with the rotating frame 14. A central shaft 18 and a support shaft 19 are mounted at the center of the rotating frame 14. The support shaft 19 is rotatably mounted to a lever 21 by way of bearings 20 and rotated from a motor 22 by way of gears 23 and 24. The lever 21 is movably attached to a sub-frame 26 secured to a frame 25 and connected at one end thereof to a cylinder 27. A stopper 45 attached to the rotating frame 14 and a member 28 attached to the frame 25 are set such that the lower roll corrugation 12 is stopped at a predetermined position relative to a press roll 29 and a sizing roll 30. Spline or keying fabrication is applied to the axial end of the lower corrugation rolls 12 and 12' and to the axial end of a driving device 31, and the power transmission is connected and disconnected by the movement of a sleeve 34 connected to an arm 33 moved by a cylinder 32. A hollow shaft 35 is rotatably mounted to the central shaft 18 and the support shaft 19 and anti-rotation means is provided to the lever 21. An aperture is perforated only in one direction at one end of the hollow shaft 35 and the other end of the shaft is connected with a suction device not illustrated. The inside of the central shaft 18 is in communication with a suction box 36 attached to the lower corrugation rolls 12 and 12' by way of a hose 37. The inner circumferential surface of the central shaft 18 and the outer circumferential surface of the hollow shaft 35 are finished at such an accuracy as causing no air leaks. A steam box 38 is secured to the support shaft 19 so that steams can be supplied to all of the corrugation rolls by way of the steam hose 39 and the steam joint 40. valves 41 and 42 are attached at the mid way of the steam hose 39. Steams are supplied to the steam box 38 by way of a steam hose 43 connected with a known universal coupling.

The sequence for replacing the corrugation rolls by using the device described above is carried out as follows by :

1. actuating the cylinder 32 to disconnect the driving device 31 and the lower corrugation roll 12,

2. actuating the cylinder 27 to lower the pressure of contact between the rotating frame 14 and the frame 25,

3. actuating the motor 22 to rotate the rotating frame 14 till the stopper 45 is brought into contact with the member 28,

4. actuating the cylinder 27 to urge the rotating frame 14 against the frame 25,

5. closing the valve 41 while opening the valve 42 and

6. rotating only the central shaft 18. Since the hollow shaft 35 is secured, suction is exerted only on the side in communication with the aperture perforated in the hollow shaft (that is, on the side of the lower corrugation roll to be operated).

As described above, the corrugation rolls can be replaced in this embodiment without dismantling and assembling work. Figures 3 though 5 show another embodiment of the pressing device for urging the rotating frame 14 to the frame 25. In the Figures, bearings 50 are secured to the frame 25. An eccentric shaft 51 is rotatably attached to the bearings 50 and the lever 52, in which the axial centers for the bearings 50 and the lever 52 are deviated by $\delta$. The arm 53 is secured to the eccentric shaft 51 at the center coaxial with the bearings 50. A cylinder 54 is pin-connected to the bearings 50 and the arm 53. A shaft 55 is attached to the lever 52 and the arm 53, between which a compression spring 56 is disposed. As shown in Figure 4, the face of contact between the lever 52 and the rotating frame 14 may be made into a wedge-like shape. When the corrugation rolls are exchanged in the device as described above, the cylinder 54 is at first actuated (pulled) and the eccentric shaft 51 is turned to upwardly move the lever 52.

Further, by actuating the cylinder 54, the lever 52 is completely aparted from the rotating frame 14 by the shaft 55. Subsequently, when the corrugation rolls have completely been exchanged, the cylinder 54 is actuated (pushed) and the compression spring 56 is compressed, by which the lever 52 swings in the direction of the rotating frame 14. Further, by actuating the cylinder 54 to turn the eccentric shaft 51, the lever 52 is pulled downwardly to urge the rotating frame 14.

As has been described above, while various operations have been required so far for replacing the corrugation rolls such as dismantling of parts and detaching or attaching of the corrugation rolls, since they can be replaced with no such operations at all according to this invention, the time required for the replacement can significantly be shortened, and one-side corrugated sheets of different waveforms can optionaly be manufactured by one single facer thereby enabling to cope with a wide variety of corrugated board sheets.

Claim

A single facer for forming a one side corrugated board sheet by passing and appending to each other a core sheet formed into a corrugated shape by a pair of upper and lower corrugation rolls into a corrugated configuration and sized at the top face thereof and a liner supplied from the other direction to between the lower corrugation roll and a pressure roll, wherein the single facer comprises a rotating frame that supports a pair of said upper and lower corrugation rolls and at least a pair of other upper and lower corrugation rolls of different waveform shapes and secured to a shaft rotatably supported to a frame, a rotational driving device connected to said shaft, a positioning member secured to said frame in contact with said rotating frame, at a predetermined rotating position thereof, a pressing device for urging said rotating frame to the frame, a connecting device capable of connecting and disconnecting the power transmission to said corrugation rolls, pipeways for communicating the suction mechanism for each of said lower corrugation rolls with a suction source by means of a switching member disposed to said shaft and a steam supply device for supplying steams to the inside of each of said corrugation rolls by way of a manifold.

# FIG. 1

FIG. 2

# FIG. 3

52

13

14

56

25

55

53

51

$\delta$

50

54

# FIG. 5

$\delta$

53

52

51

50

25

# FIG. 4

52

14

## FIG. 6

## FIG. 7

# INTERNATIONAL SEARCH REPORT

0233293

International Application No. PCT/JP86/00250

## I. CLASSIFICATION OF SUBJECT MATTER (if several classification symbols apply, indicate all) [3]

According to International Patent Classification (IPC) or to both National Classification and IPC

Int.Cl[4]    B31F1/28

## II. FIELDS SEARCHED

### Minimum Documentation Searched [4]

| Classification System | Classification Symbols |
|---|---|
| IPC | B31F1/20, 1/22, 1/24, 1/26, 1/28<br>B32B3/28 |

### Documentation Searched other than Minimum Documentation to the Extent that such Documents are Included in the Fields Searched [5]

| | |
|---|---|
| Jitsuyo Shinan Koho | 1926 - 1986 |
| Kokai Jitsuyo Shinan Koho | 1971 - 1986 |

## III. DOCUMENTS CONSIDERED TO BE RELEVANT [14]

| Category[*] | Citation of Document, [16] with indication, where appropriate, of the relevant passages [17] | Relevant to Claim No. [18] |
|---|---|---|
| P | JP, A, 61-54926 (Rengo Co., Ltd.)<br>19 March 1986 (19. 03. 86)<br>(Family: none) | 1 |
| X | JP, B2, 59-15065 (Rengo Co., Ltd.)<br>7 April 1984 (07. 04. 84)<br>& FR, A1, 2,487,733<br>& GB, B2, 2,084,074<br>& DE, C2, 3,128,587 | 1 |

* Special categories of cited documents: [16]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search [2] | Date of Mailing of this International Search Report [2] |
|---|---|
| July 29, 1986 (29. 07. 86) | August 11, 1986 (11. 08. 86) |
| International Searching Authority [1] | Signature of Authorized Officer [20] |
| Japanese Patent Office | |

Form PCT/ISA/210 (second sheet) (October 1981)